(19)

Europäisches Patentamt
European Patent Office
Office européen des brevets

(11)  **EP 2 765 228 A2**

(12) # EUROPEAN PATENT APPLICATION
published in accordance with Art. 153(4) EPC

(43) Date of publication:
**13.08.2014 Bulletin 2014/33**

(21) Application number: **12836959.2**

(22) Date of filing: **26.09.2012**

(51) Int Cl.:
***D02G 3/02*** *(2006.01)*  ***D02G 3/26*** *(2006.01)*
***D02G 3/48*** *(2006.01)*

(86) International application number:
**PCT/KR2012/007734**

(87) International publication number:
**WO 2013/048097 (04.04.2013 Gazette 2013/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2011  KR 20110099479**

(71) Applicant: **Kolon Industries, Inc.
Gwacheon-si, Gyeonggi-do 427-709 (KR)**

(72) Inventors:
• **LEE, Min Ho
Gongju-si
Chungcheongnam-do 314-110 (KR)**
• **JEON, Ok Wha
Daegu 702-110 (KR)**

(74) Representative: **Ter Meer Steinmeister & Partner
Patentanwälte
Mauerkircherstrasse 45
81679 München (DE)**

(54)  **ARAMID FIBER CORD, AND PREPARATION METHOD THEREOF**

(57)   The present invention relates to an aramid fiber cord which has high strength as well as good disk fatigue property such that, when it is used as a tire reinforcement, the degradation of its physical properties and the degradation of its adhesion strength with respect to a rubber after long and high speed driving can be minimized, and to a method for manufacturing the same. The aramid fiber cord of the present invention comprises an aramid cabled yarn; and an adhesive coated on an outer surface of the aramid cabled yarn, wherein penetration rate of the adhesive into the aramid cabled yarn is 3.5 to 9 %.

FIG. 1

EP 2 765 228 A2

## Description

[Technical Field]

The present invention relates to an aramid fiber cord and a method for manufacturing the same, and more particularly, to an aramid fiber cord which has high strength as well as good disk fatigue property such that, when it is used as a tire reinforcement, the degradation of its physical properties after long and high speed driving can be minimized, and to a method for manufacturing the same.

[Background Art]

A fiber cord, particularly a fiber cord treated with an adhesive, are widely used as a reinforcement for the rubber products such as tires, conveyor belts, V-belts, hoses and so on. The fiber cord may be made of nylon fibers, polyester fibers, rayon fibers and the likes. Among the important methods for improving the performance of the final rubber products is to improve the physical properties of the fiber cords which are used as the reinforcements therefor.

A nylon fiber having high elongation and tenacity is generally used for the tires of the heavy-duty trucks imposing heavy load and the cars running the road of rough surface such as an unpaved road. Since the nylon fiber has low modulus, however, it is not proper for the tires of the racing cars running at high speed and the sedan which requires good riding quality.

A polyester fiber has better dimensional stability and price competitiveness than a nylon fiber, and thus the use thereof in the field of a tire cord is increasing. However, its heat resistance and adhesion strength with respect to a rubber are too low to be used for a tire of a car running at high speed.

A rayon fiber, a regenerated cellulose fiber, exhibits excellent tenacity retention rate and dimensional stability at high temperature. Since the tenacity of the rayon fiber is remarkably lowered by moisture, however, it is required to exhaustively manage the moisture when a tire is manufactured. Further drawback to it is lower tenacity compared to the price than those of other fibers.

In lots of applications such as heavy vehicles, racing cars, aircrafts, agricultural vehicles and so on, a fiber cord for a tire enforcement is required to have much higher strength and modulus than those obtainable from a polyester or nylon fiber. It is an aromatic polyamide fiber, also known as an aramid fiber, that can provide such high strength and modulus.

However, since the aramid fiber has an inherent property of high modulus, the fiber cord manufactured using the same generally has very low fatigue resistance. If a fiber cord having such low fatigue resistance is used as a tire enforcement, lots of problems as described below would occur.

When a car is driven, the temperature of the tire normally rises due to the friction. Particularly, during a high speed driving, the tire is maintained at high temperature and high pressure for a long period of time, and thus the fiber cord for the tire enforcement is exposed to the fatigue conditions of high temperature and high pressure. If the fatigue resistance of the fiber cord is low, the physical properties thereof, especially tenacity, are rapidly degraded due to the repetitive stretching/shrinkage, and thus the driving performance of the tire might be significantly degraded. Further, in serious cases, the tire may burst during driving.

[Disclosure]

[Technical Problem]

Therefore, the present invention is directed to an aramid fiber cord and a method for manufacturing the same capable of preventing these limitations and drawbacks of the related art.

An aspect of the present invention is to provide an aramid fiber cord which has high strength as well as good disk fatigue property such that, when it is used as a tire reinforcement, the degradation of its physical properties after long and high speed driving can be minimized.

The other aspect of the present invention is to provide a method for manufacturing an aramid fiber cord which has high strength as well as good disk fatigue property such that, when it is used as a tire reinforcement, the degradation of its physical properties after long and high speed driving can be minimized.

Additional aspects and features of the present invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims.

[Technical Solution]

In accordance with the aspect of the present invention, there is provided an aramid fiber cord comprising: an aramid cabled yarn; and an adhesive coated on an outer surface of the aramid cabled yarn, wherein penetration rate of the adhesive into the aramid cabled yarn is 3.5 to 9 %.

In accordance with the other aspect of the present invention, there is provided a method for manufacturing an aramid fiber cord, the method comprising: preparing an aramid cabled yarn; and dipping the aramid cabled yarn in an adhesive solution, wherein a tension of 0.2 to 5 kg/cord is applied to the aramid cabled yarn when the aramid cabled yarn is dipped in the adhesive solution.

It is to be understood that both the foregoing general description and the following detailed description of the present invention are exemplary and explanatory and are intended to provide further explanation of the invention as claimed.

[Advantageous Effect]

The aramid fiber cord of the present invention satisfies the strength generally required of the tire cord for heavy vehicles, racing cars, aircrafts, agricultural vehicles and so on and, at the same time, has excellent disc fatigue properties. Thus, if the aramid fiber cord of the present invention is used as a tire enforcement, , the degradation of its physical properties after long and high speed driving can be minimized

[Description of Drawings]

The accompanying drawing, which is included to provide a further understanding of the invention and are incorporated in and constitute a part of this application, illustrates embodiment of the invention and together with the description serves to explain the principle of the invention.

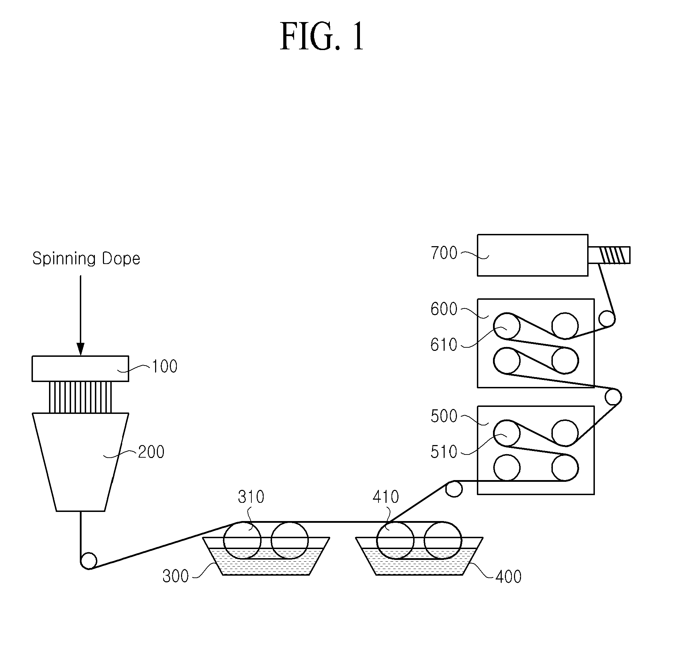

FIG. 1 schematically shows a system for manufacturing an aramid fiber cord according to one embodiment of the present invention.

[Mode for Invention]

The embodiments of the present invention are provided merely to make the invention become better understood and does not restrict the scope of the invention thereto. Those skilled in the art will appreciate that various modifications and alternatives are possible, without departing from the scope and spirit of the invention.

The term 'multifilament' as used herein refers to a bundle of monofilaments formed by coagulating the spinning dope extruded through a spinneret.

The term 'single yarn' as used herein refers to a ply of yarn prepared by twisting a multifilament in a certain direction, and the twist of the single yarn is referred to as 'primary twist.'

The term 'cabled yarn' as used herein refers to a yarn prepared by twisting at least 2 single yarns together in a certain direction, which is also called 'raw cord.' The twist of the cabled yarn is referred to as 'secondary twist.'

Generally, the primary twist provides a yarn with a twist in counterclockwise direction (Z-twist) and the secondary twist provides a yarn with a twist in clockwise direction (S-twist).

The term 'twist number' as used herein refers to the number of twist per 1 m, and the measure of the twist number is TPM (Twist Per Meter).

The term 'fiber cord' as used herein generally refers to a cabled yarn containing an adhesive so that it can be embedded to a rubber product at firsthand, which is also called 'dipped cord.' The "fiber cord" also include an adhesive-impregnated fabric made by weaving a fabric with the cabled yarns and then dipping the fabric into an adhesive solution.

The term 'penetration rate of an adhesive into a cabled yarn' as used herein is defined by the formula as below:

$$P = [(A1 - A2)/A1] \times 100 \ (\%)$$

wherein P is the penetration ratio of the adhesive into the cabled yarn, A1 is the area of the first polygon formed by connecting the peripheral monofilaments in a cross section of the fiber cord perpendicular with the longitudinal direction of the fiber cord, and A2 is the area of the second polygon formed by connecting the monofilaments in the cross section of the fiber cord, which are in contact with the adhesive only partially.

The term 'tenacity at 3% elongation' as used herein refers to the tenacity corresponding to the elongation of 3% in the elongation-load graph of the cabled yarn containing the adhesive.

The term 'strength at 3% elongation' as used herein refers to the 'tenacity at 3% elongation' divided by the fineness of the aramid fiber cord.

Hereinafter, an embodiment of the method of the invention for manufacturing an aramid fiber cord will be described in detail with reference to the accompanying drawings.

FIG. 1 schematically shows a system for manufacturing an aramid fiber cord according to one embodiment of the present invention.

First, a multifilament is formed by dissolving an aromatic polyamide, e.g., poly(paraphenylene terephthalate) (PPD-T), having inherent viscosity (I.V.) of 5.0 to 7.0 in a concentrated sulfuric acid solvent to prepare a spinning dope, spinning the spinning dope through a spinneret 100, and then allowing the dope to pass through an air gap and a coagulation bath 200 sequentially to coagulate it.

When the dope extruded from the spinneret 100 passes through the coagulating solution, the sulfuric acid is removed from the dope thereby forming the multifilament. If the sulfuric acid existing at the outer side of the dope is rapidly removed, the surface becomes coagulated before the sulfuric acid existing at the inner side gets out of it, thereby causing the degradation of the uniformity of the multifilament. Therefore, it is desirable to add sulfuric acid to the coagulation solution to prevent the sulfuric acid at the outer side of the dope from getting out of it rapidly.

Then, the sulfuric acid remaining in the multifilament thus obtained is removed. Although most of the sulfuric acid used for preparing the spinning dope is removed when the dope passes through the coagulation bath 200, it is possible that it is not completely removed and some of them remains. Further, if sulfuric acid is added to the coagulating solution in the coagulation bath 200 to enable the sulfuric acid in the dope to uniformly get out of it, it is more than likely that there is sulfuric acid remaining in the multifilament. Since the sulfuric acid remaining in the multifilament, even if the amount thereof is so small, reversely affects the quality of the aramid fiber, it is important to completely remove the sulfuric acid from the multifilament. The sulfuric acid remaining in the multifilament can be removed therefrom by washing it with water or mixture solution of water and alkali solution.

The washing process may be a multistep process. For example, the first washing of the multifilament having sulfuric acid is performed in the first washing bath 300 containing 0.3 to 1.3 % aqueous caustic solution, and then the second washing thereof is performed in the second washing bath 400 containing 0.01 to 0.1 % aqueous caustic solution. The first and second washing rolls 310, 410 are provided in the first and second washing baths 300, 400 respectively to move the multifilament.

Subsequently, a drying process is carried out in the drying unit 500 to remove the moisture remaining on the multifilament. The moisture content of the filament can be controlled during the drying process by adjusting the time for which the filament keeps in contact with the drying roll 510 in the drying unit 500 or by adjusting the temperature of the drying roll 510.

The dried multifilament is heat-treated in the heat treatment unit 600 having a plurality of heat treatment roll 610 so as to complete the aramid multifilament.

The aramid multifilament of the present invention has strength of 10 to 25 g/d, modulus of 400 to 750 g/d, and elongation at break of 2 to 6 %. The aramid multifilament of the present invention has total fineness of 800 to 10,000 denier, and may comprise 500 to 1,200 monofilaments. The fineness of the monofilament is desirably 1 to 2 denier.

The aramid multifilament thus prepared is twisted by means of a twister to prepare an aramid single yarn. Then, 2 plies of the aramid single yarns are twisted together to prepare an aramid cabled yarn. According to one embodiment of the present invention, the aramid single yarn is prepared by twisting the multifilament in counterclockwise direction (Z-direction) at the first twist number, and the aramid cabled yarn is prepared by twisting 2 plies of the aramid singles yarns together in clockwise direction (S-direction) at the second twist number.

According to one embodiment of the present invention, the first and second twist numbers are 200 to 600 TPM (Twist Per Meter). If the twist number is less than 200 TPM, the strength of the aramid cabled yarn is high, but the elongation at break of the fiber cord made thereof is lowered and adhesion strength of the fiber cord with respect to a rubber is degraded. On the other hand, if the twist number is more than 600 TPM, the fiber cord made of such aramid cabled yarn cannot satisfy the strength of such degree as required in this art.

The aramid cabled yarn thus obtained is dipped into the resorcinol-formaldehyde-latex (RFL) solution. 1-bath dipping or 2-bath dipping may be used. According to one embodiment of the present invention, the RFL adhesive solution comprises 1.0 to 3.0 wt.% of resorcinol, 2.0 to 4.0 wt.% of formalin (37%), 0.5 to 1.5 wt.% of sodium hydroxide (10%), 35 to 55 wt.% of styrene/butadiene/vinylpyridine (15/70/15) rubber (41%), and water.

According to the present invention, a tension of 0.2 to 5 kg/cord is applied to the aramid cabled yarn when the aramid cabled yarn is dipped into the adhesive solution. According to one embodiment of the present invention, the tension may be controlled by changing the ratio of the rotating speed of the rear roll to that of the front roll in the dipping bath.

If the tension is less than 0.2 kg/cord, the penetration ratio of the adhesive into the cabled yarn becomes more than 9%. If the penetration ratio of the adhesive into the cabled yarn is more than 9%, the strength of the aramid fiber cord is lowered and the disc fatigue property of such degree as required in this art cannot be satisfied. Further, due to the very characteristic of the cabled yarn having twist, if the tension is less than 0.2 kg/cord, the cabled yarn droops and leaves the roll, thereby adversely affecting the processability.

On the other hand, if the tension is more than 5 kg/cord, the penetration ratio of the adhesive into the cabled yarn becomes less than 3.5%. If the penetration ratio of the adhesive into the cabled yarn is less than 3.5%, the adhesion strength with respect to a rubber becomes low. Furthermore, if the high tension more than 5 kg/cord is applied, direct damages may be caused to the cabled yarn and fiber cord, or the strength at 3% elongation becomes more than 8 g/d thereby adversely affecting the fatigue properties. Thus, the fatigue properties of the tire made of the fiber cord thus obtained cannot satisfy such degree as required in this art.

The aramid cabled yarn impregnated with the RFL solution through the dipping process is dried at 105 to 200 °C for 10 to 400 seconds and then heat-treated at 240 to 280 °C for 10 to 400 seconds to complete an aramid fiber cord. The drying process is to remove the moisture existing in the aramid cabled yarn, and the heat treatment process is to activate the RFL adhesive solution in the aramid cabled yarn so that the aramid fiber cord is provided with the adhesion strength with respect to a rubber.

If the drying time and heat treatment time are shorter than the aforementioned ranges or the drying temperature and heat treatment temperature are lower than the aforementioned ranges, the adhesion strength of the aramid fiber cord with respect to a rubber becomes low. On the other hand, if the drying time and heat treatment time are longer than the aforementioned ranges or the drying temperature and heat treatment temperature are higher than the aforementioned ranges, the excessive heat makes the adhesion strength of the aramid fiber cord with respect to a rubber lower, and its physical properties such as strength, fatigue resistance and so on are degraded.

The aramid fiber cord of the present invention made through the aforementioned method has strength at 3% elongation of 6.3 to 8 g/d and tenacity retention rate of 95% or more after a disc fatigue test performed according to JIS-L 1017 method of Japanese Standard Association (JSA).

Furthermore, the aramid fiber cord of the present invention has tenacity retention rate of 80% or more after a disc fatigue test performed under the conditions severer than those of the JIS-L 1017 method of JSA in terms of stretching, contracting and time. Accordingly, the aramid fiber cord of the present invention can be used as a cord for a high performance tire

Hereinafter, the examples of the present invention and comparative example will be described to explain the present invention in detail. Since the following examples are provided only for better understanding of the present invention, the scope of the present invention should not be limited thereto.

Example 1

A spinning dope was prepared by dissolving poly(paraphenylene terephthalamide) (PPD-T) having inherent viscosity (I.V.) of 5.5 in a 100% concentrated sulfuric acid solvent. A multifilament was formed by spinning the spinning dope through a spinneret, and then allowing the dope to pass through an air gap of 7 mm and a coagulation bath containing 13% sulfuric acid aqueous solution sequentially to coagulate it.

To remove the sulfuric acid remaining in the aramid multifilament, the first washing of the multifilament was performed in the first washing bath containing 0.5% aqueous caustic solution, and then the second washing was performed in the second washing bath containing 0.05% aqueous caustic solution.

Subsequently, a drying process was carried out to remove the moisture remaining in the aramid multifilament and the dried aramid multifilament was heat-treated so that a final aramid multifilament can be obtained.

The aramid multifilament was primarily twisted in counterclockwise direction at 350 TPM by means of a Ring Type Twister of Allma Co. to prepare an aramid single yarn, and then, 2 plies of the aramid single yarns were secondarily twisted together in clockwise direction at 350 TPM to prepare an aramid cabled yarn.

The aramid cabled yarn thus obtained was dipped into the resorcinol-formaldehyde-latex (RFL) solution comprising 2.0 wt.% of resorcinol, 3.2 wt.% of formalin (37%), 1.1 wt.% of sodium hydroxide (10%), 43.9 wt.% of styrene/butadiene/vinylpyridine (15/70/15) rubber (41%), and water. A tension applied to applied to the aramid cabled yarn during the dipping process was adjusted to 0.5 kg/cord.

The aramid cabled yarn impregnated with the RFL solution through the dipping process was dried at 150°C for 100 seconds and then heat-treated at 240°C for 100 seconds to complete an aramid fiber cord.

Examples 2 & 3 and Comparative Example

Aramid fiber cords were made in the same manner as that of the Example 1 except that the tension applied to the aramid cabled yarn during the dipping process was adjusted in accordance with the following Table 1.

[Table 1]

|  | Ex. 2 | Ex. 3 | Comp. Ex. |
|---|---|---|---|
| Tension applied during Dipping Process (kg/cord) | 1 | 2 | 6 |

The aramid fiber cords finally obtained in the Examples 1 to 3 and Comparative Example were evaluated with respect to their penetration rate of adhesive, strength at 3% elongation, breaking strength, and disc fatigue property in accordance with the following methods, and the results thereof are shown in the following Table 2.

Penetration Rate of Adhesive into Cabled Yarn

The aramid fiber cord was fixed on a metal rack of predetermined thickness and size, and then the portion of the aramid fiber cord sticking out of the metal rack was cut out in the direction perpendicular with the longitudinal direction thereof with a sharp instrument. The area of the first polygon formed by connecting the peripheral monofilaments in the cross section of the fiber cord, and the area of the second polygon formed by connecting the monofilaments in the cross section of the fiber cord, which are in contact with the adhesive only partially, were measured respectively by means of an optical microscope of 200 magnifications. Then, the penetration rate of the adhesive into the cabled yarn was calculated in accordance with the following formula:

$$P = [(A1 - A2)/A1] \times 100 \, (\%)$$

wherein P is the penetration ratio of the adhesive into the cabled yarn, A1 is the area of the first polygon formed by connecting the peripheral monofilaments in a cross section of the fiber cord perpendicular with the longitudinal direction of the fiber cord, and A2 is the area of the second polygon formed by connecting the monofilaments in the cross section of the fiber cord, which are in contact with the adhesive only partially.

Strength at 3% Elongation

The tenacity corresponding to the 3% elongation in the elongation-load graph obtained through the method for measuring the strength of the aramid fiber cord was indentified, and then, the identified tenacity was divided by the fineness of the aramid fiber cord to obtain the strength at 3% elongation.

Breaking Strength

The breaking tenacity of the aramid fiber cord was measured according to ASTM D-885 test method by applying the tensile velocity of 300 m/min to the sample having the length of 250 mm using the Instron Tester (Instron Engineering Corp., Canton, Mass). Then, the breaking tenacity so measured was divided by the fineness of the aramid fiber cord to obtain the breaking strength (g/d).

Disc Fatigue Property

The tenacity (i.e., tenacity before fatigue) of the aramid fiber cord was measured, and then, the aramid fiber cord and a rubber were vulcanized together to produce a sample. Then, according to JIS-L 1017 method of Japanese Standard Association, the fatigue was applied to the sample by means of the disc fatigue tester by repeating the stretching and contracting steps within the range of ± 2% at 80 °C for 8 hours while rotating the sample at 2500 rpm. Further, to measure the fatigue property thereof under the severer conditions, the fatigue was applied to the sample by repeating the stretching and contracting steps within the range of +3/-10% for 16 hours. Subsequently, the rubber was removed from the sample and the tenacity after fatigue of the aramid fiber cord was measured. The tenacity retention rate defined as the following formula was calculated based on the tenacity before fatigue and tenacity after fatigue:

$$\text{Tenacity retention rate } (\%) = [\text{Tenacity after fatigue (kgf)} / \text{Tenacity before fatigue}$$

$$(\text{kgf})] \times 100$$

wherein the tenacities (kgf) before and after fatigue were obtained respectively according to ASTM D-885 by applying the tensile velocity of 300 m/min to the sample having the length of 250 mm using the Instron Tester (Instron Engineering Corp., Canton, Mass) and measuring the breaking tenacity of the aramid fiber cord.

The strength and disc fatigue property of the aramid fiber cords of the examples and comparative example as measured through the aforementioned methods are shown in the following Table 2.

[Table 2]

|  | Ex. 1 | Ex. 2 | Ex. 3 | Comp. Ex. |
|---|---|---|---|---|
| Penetration Rate of Adhesive (%) | 8.5 | 6.3 | 4.5 | 3.2 |
| Strength at 3% Elongation (g/d) | 7.4 | 7.0 | 7.7 | 8.5 |
| Breaking Strength (g/d) | 17.8 | 17.8 | 17.9 | 18.2 |
| Tenacity retention rate (%) | 97.1 | 99.5 | 95.3 | 94.5 |
| Tenacity retention rate under severer conditions (%) | 89.7 | 93.2 | 85.6 | 56.9 |

As shown in Table 2, in the comparative example where the tension applied to the cabled yarn when it was dipped into the RFL adhesive solution was more than 5 kg/cord, the strength at 3% elongation was more than 8 g/d and the penetration rate of the adhesive into the cabled yarn was less than 3.5%. Consequently, although the tenacity degradation due to the penetration of the adhesive solution was not caused, the disc fatigue property and the tenacity retention rate after the severer conditions did not come up to such degree as required in this art. Particularly, when the disc fatigue property under the severer conditions was measured, some samples thereof were broken.

Meanwhile, it is shown that the penetration rate of the adhesive into the cabled yarn has a significant effect on the 'tenacity retention rate' and 'tenacity retention rate under severer conditions' of the aramid fiber cord while having little effect on the breaking strength thereof. Particularly, in each of the cases where the penetration rate of the adhesive is more than 7% (Ex. 1) or less than 5% (Ex. 3 and Comp. Ex.), the aramid fiber cords satisfied neither the 'tenacity retention rate' of 98% or more nor the 'tenacity retention rate under severer conditions' of 90% or more. Accordingly, from the test results as above, it might be said that it is most desirable that the penetration rate of the adhesive into the cabled yarn is 5 to 7 %.

**Claims**

1. An aramid fiber cord comprising:

   an aramid cabled yarn; and
   an adhesive coated on an outer surface of the aramid cabled yarn,
   wherein penetration rate of the adhesive into the aramid cabled yarn is 3.5 to 9 %.

2. The aramid fiber cord of claim 1, wherein the aramid fiber cord has strength at 3% elongation of 6.3 to 8 g/d.

3. The aramid fiber cord of claim 1, wherein the aramid fiber cord has tenacity retention rate of 95% or more after a disc fatigue test performed according to JIS-L 1017 method of Japanese Standard Association.

4. The aramid fiber cord of claim 1, wherein the adhesive is a resorcinol-formaldehyde-latex adhesive.

5. The aramid fiber cord of claim 1, wherein the aramid cabled yarn comprises at least 2 plies of aramid single yarns secondarily-twisted together at a first twist number, and each of the aramid single yarns is an aramid multifilament primarily-twisted at a second twist number.

6. The aramid fiber cord of claim 5, wherein each of the first and second twist numbers is 200 to 600 TPM.

7. The aramid fiber cord of claim 1, wherein the penetration rate of the adhesive into the aramid cabled yarn is 5 to 7 %.

8. A method for manufacturing an aramid fiber cord, the method comprising:

   preparing an aramid cabled yarn; and

dipping the aramid cabled yarn into an adhesive solution,
wherein a tension of 0.2 to 5 kg/cord is applied to the aramid cabled yarn when the aramid cabled yarn is dipped into the adhesive solution.

9. The method of claim 8, wherein the preparing the aramid cabled yarn comprises:

primarily-twisting aramid multifilament at a first twist number to prepare an aramid single yarn; and
secondarily-twisting two plies of the aramid single yarns together at a second twist number.

10. The method of claim 9, wherein each of the first and second twist numbers is 200 to 600 TPM.

11. The method of claim 8, further comprising:

drying the aramid cabled yarn containing the adhesive solution after the dipping;
heat-treating the dried aramid cabled yarn.

# FIG. 1